# FASCICULE DE BREVET EUROPEEN

(11) **EP 2 321 178 B1**
(45) Date de publication et mention de la délivrance du brevet: **27.04.2016**
(21) Numéro de dépôt: 09737016.7
(22) Date de dépôt: 14.08.2009
(51) Int. Cl.: B64D 15/12, F02C 7/047, H05B 3/26, H05B 3/28

(54) **PROCEDE DE FABRICATION D'UN ELEMENT DE DEGIVRAGE DE NACELLE**
FERTIGUNGSVERFAHREN FÜR EINE ENTEISUNGSSTRUKTUR EINER TRIEBWERKSGONDEL
METHOD FOR MAKING A NACELLE DE-ICING ELEMENT

(30) Priorité: 03.09.2008 FR 0804824
(43) Date de publication de la demande: 18.05.2011
(73) Titulaire: Aircelle, 76700 Gonfreville l'Orcher (FR)
(72) Inventeur: VALLEROY Laurent, F-76600 Le Havre (FR); GEROME Marc, F-76600 Le Havre (FR)
(74) Mandataire: Gaillarde, Frédéric F. Ch.
(86) Numéro de dépôt international: PCT/FR2009/001008
(87) Numéro de publication internationale: WO 2010/026304

(56) Documents cités:
- EP-A- 1 826 119
- GB-A- 885 131
- US-A1- 2008 179 448

## Description

L'invention concerne un procédé de fabrication d'un élément comportant un dispositif de dégivrage.

L'invention concerne également une nacelle pour turboréacteur comprenant un tel élément.

Un avion est propulsé par un ou plusieurs ensembles propulsifs comprenant chacun un turboréacteur logé dans une nacelle tubulaire. Chaque ensemble propulsif est rattaché à un aéronef par un mât situé sous une aile ou au niveau du fuselage.

Une nacelle présente généralement une structure comprenant une entrée d'air en amont du moteur et une section médiane apte à entourer une soufflante du turboréacteur, une section aval abritant des moyens d'inversion de poussée et apte à entourer la chambre de combustion du turboréacteur. La nacelle est terminée par une tuyère d'éjection dont la sortie est située en aval du turboréacteur.

L'entrée d'air comprend, d'une part, une lèvre d'entrée adaptée pour permettre la captation optimale vers le turboréacteur de l'air nécessaire à l'alimentation de la soufflante et des compresseurs internes du turboréacteur, et d'autre part, une structure aval, sur laquelle est rapportée la lèvre, destinée à canaliser convenablement l'air vers les aubes de la soufflante. L'ensemble est rattaché en amont d'un carter de la soufflante appartenant à la section amont de la nacelle.

En vol, selon les conditions de température et d'humidité, de la glace peut se former sur la nacelle en divers endroits dont la surface externe de la lèvre d'entrée d'air. La présence de glace ou de givre modifie les propriétés aérodynamiques de l'entrée d'air et perturbe l'acheminement de l'air vers la soufflante.

Une solution pour dégivrer ou déglacer la nacelle, notamment la surface externe de la lèvre d'entrée d'air, consiste à éviter que de la glace ne se forme sur la paroi en réchauffant ces dernières par une résistance électrique chauffante. La résistance chauffante est montée typiquement sur ou dans la paroi externe d'un élément à dégivrer, par exemple dans le cas où les résistances chauffantes sont sous forme de feuilles.

Un exemple d'un tel dispositif de dégivrage est illustré dans le document EP-A2-1826119.

Or, la fabrication d'un tel élément est difficile à réaliser à cause de la géométrie de la paroi. En effet, le dispositif de dégivrage ne doit pas interférer avec d'autres performances réalisées par l'élément de la nacelle telle que l' absorption les bruits générés par le fonctionnement du turboréacteur. En particulier, la résistance chauffante ne doit pas interférer avec les trous de ce dernier, par exemple en bouchant ces trous.

Dans le cas où la résistance électrique est sous la forme de feuilles et dans le cas où les trous acoustiques ont été réalisés en premier, le placement desdites feuilles autour des trous acoustiques est difficile. Dans le cas où les feuilles résistives sont placées en premier, la perforation desdites feuilles pour obtenir des trous acoustiques endommage la résistance acoustique.

De plus, les résistances chauffantes de l'art antérieur présente une intégration sur des supports composites effectuée généralement de manière manuelle. De ce fait, la fabrication de ces résistances est longue et complexe.

En outre, les tolérances de fabrication et la localisation des résistances chauffantes sont variables selon les opérateurs.

Un but de la présente invention est donc de fournir une lèvre d'entrée d'air ne présentant pas les inconvénients précités.

A cet effet, selon un premier aspect, l'invention a pour objet un procédé de fabrication d'une lèvre d'entrée d'air d'une nacelle comprenant les étapes où :
A. on fabrique un réseau de résistances chauffantes sur un support par un procédé de photolithographie ;
B. on applique un pli de matériaux composites sur ledit réseau obtenu à l'issue de l'étape A pour obtenir un ensemble de dégivrage ;
B1. on perce l'ensemble de dégivrage obtenu à l'issue de l'étape B et une peau interne, comportant une peau composite sur laquelle est montée une structure en nid d'abeille, par des moyens de perçage de sorte à obtenir des trous acoustiques ;
C. on applique une peau interne, destinée à être placée à l'intérieur d'une lèvre d'entrée d'air de la nacelle, sur l'ensemble de dégivrage obtenu à l'issue de l'étape B1.

Le procédé selon l'invention permet avantageusement de réaliser simplement et efficacement un élément susceptible d'être dégivré.

De plus, le procédé de l'invention présente un nombre d'étapes limitant les opérations manuelles.

Le procédé de l'invention permet de manière avantageuse de positionner précisément les trous acoustiques par rapport aux éléments conducteurs. Ainsi, la distance d'isolement des résistances chauffantes et de leur alimentation électrique avec lesdits trous est avantageusement respectée ce qui garantit un bon fonctionnement de l'ensemble de dégivrage.

Contrairement au cas où la résistance électrique est sous forme de feuilles juxtaposées les unes à côté des autres, le placement de la résistance par rapport aux trous acoustiques est plus précis avec le procédé de l'invention de même qu'aucun perçage de ladite résistance n'est nécessaire.

Selon d'autres caractéristiques de l'invention, la structure de l'invention comporte l'une ou plusieurs des caractéristiques optionnelles suivantes considérées seules ou selon toutes les combinaisons possibles :
- l'étape B est une étape dans laquelle on insère dans des plis de matériaux composites ledit réseau obtenu à l'issue de l'étape A ;
- les trous acoustiques obtenus ont un diamètre compris entre 0,2 mm et 2,5 mm, ce qui assure une bonne absorption acoustique et une bonne tenue structurale ;
- préalablement à l'étape B, on fabrique un réseau d'alimentation électrique sur la face opposée de la face du support comportant le réseau de résistances chauffantes ce qui permet d'alimenter en électricité le réseau de résistances chauffantes ;
- le réseau d'alimentation est relié au réseau de résistances chauffantes par l'intermédiaire de moyens de connexion passant au travers du support ce qui permet d'éviter l'ajout de fils électriques ;
- le réseau d'alimentation comprend un métal ou un alliage, dont la résistivité à température ambiante est égale à environ 1,7 µΩ.cm ;
- les résistances chauffantes comprennent un métal ou alliage de résistivité comprise entre 0,000 24 Ω.mm et 0,002 Ω.mm, ce qui permet d'obtenir un bon dégivrage de l'élément de l'invention en employant le minimum d'énergie électrique ;
- l'alliage des résistances chauffantes est choisi parmi les alliages de cuivre et de nickel ;
- le support est fabriqué à partir de fibres de verre, de résine epoxy, ou de film isolant thermoplastique ;
- chaque pli comprend un matériau type fibre de verre associée à une résine thermodure ou thermoplastique;
- pendant l'étape A, le support est sensiblement plat ;
- préalablement à l'étape C, on découpe la surface de l'ensemble de dégivrage de sorte que l'écart maximal entre l'ensemble de dégivrage et la peau interne soit de l'ordre de 1,7 mm ce qui permet une bonne conformation de l'ensemble de dégivrage ;
- on applique à l'issue de l'étape B ou C un revêtement de surface sur l'ensemble de dégivrage ce qui permet de répondre aux contraintes aérodynamiques, d'érosion et de protection contre la foudre.

Selon un deuxième aspect, l'invention a pour objet une nacelle pour turboréacteur comportant un élément obtenu selon le procédé de l'invention. De manière préférentielle, l'élément de l'invention est une lèvre d'entrée d'air qui est un élément de la nacelle particulièrement sensible au dépôt de givre ou de glace.

L'invention sera davantage comprise à la lecture de la description non limitative qui va suivre, faite en référence aux figures ci-annexées.
- la figure 1 est une coupe schématique transversale d'une nacelle de l'invention entourant un turboréacteur ;
- la figure 2 est une coupe schématique transversale d'un exemple d'élément de l'invention ;
- la figure 3 à 7 est une coupe transversale partielle d'un ensemble de dégivrage obtenu selon le procédé de l'invention;
- la figure 8 est une coupe transversale d'un panneau acoustique d'un élément obtenu selon le procédé de l'invention.

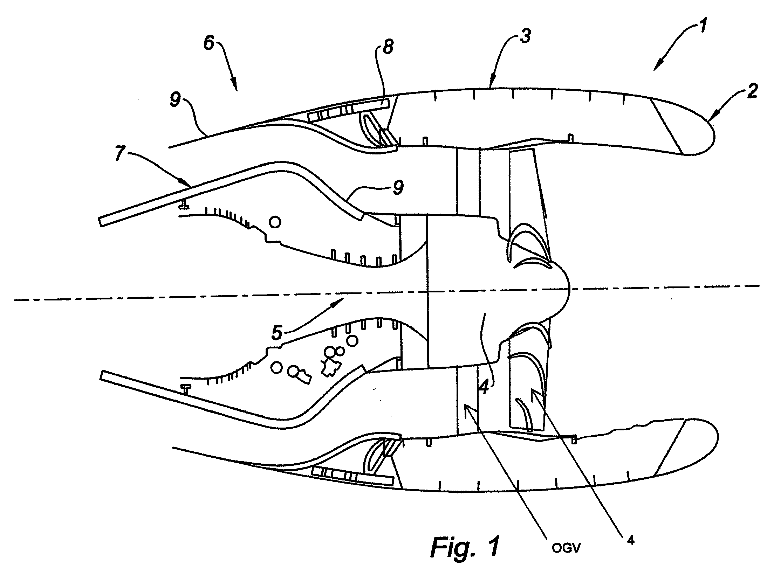

Comme représenté à la figure 1, une nacelle 1 selon l'invention comprend une lèvre d'entrée d'air 2, une structure médiane 3 entourant une soufflante 4 d'un turboréacteur 5 et un ensemble aval 6. L'ensemble aval 6 est constitué d'une structure interne fixe 7 (IFS) entourant la partie amont du turboréacteur 5, d'une structure externe fixe 8 (OFS) et d'un capot mobile 9 comportant des moyens d'inversion de poussée.

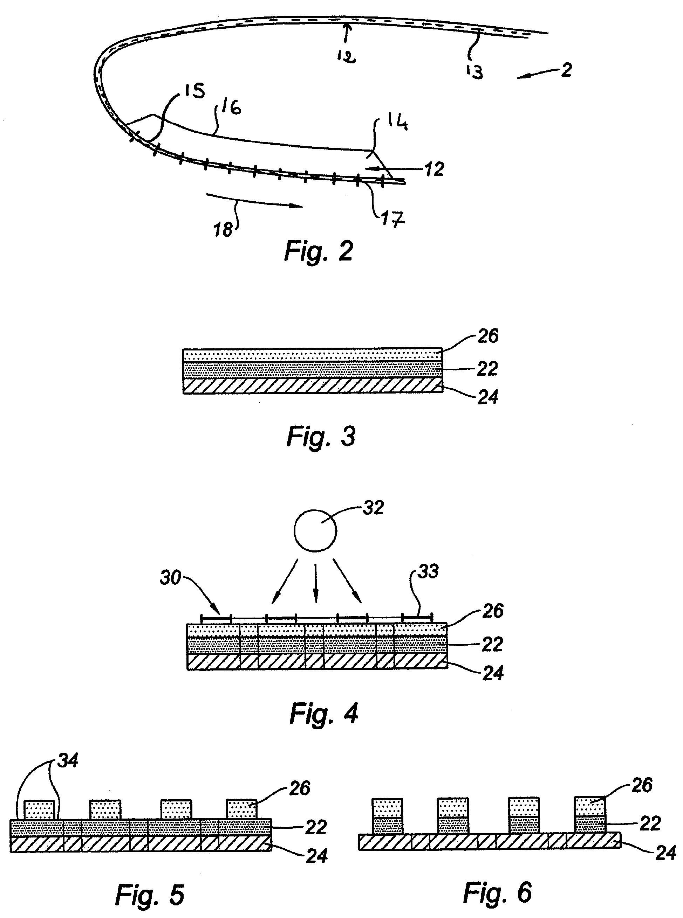

L'élément selon l'invention peut être une lèvre d'entrée d'air qui est un élément de la nacelle particulièrement sensible au dépôt de glace et de givre (voir figure 2). Il est également possible d'employer le procédé selon l'invention pour fabriquer toute surface devant être dégivrée, telles que des conduits pour hélicoptère ou aéronef, ou les zones exposées d'un turboréacteur comme les aubes de souflantes, les bras traversant le flux d'air comme les OGV, ...

Ce procédé est applicable à une structure composite quel soit monolithique, autoraidie ou sandwich afin de répondre aux contraintes de rendement thermique, de tenue structurale, ...

Dans le mode de réalisation représenté à la figure 2, la lèvre d'entrée d'air 2 de l'invention comporte une peau interne 12 montée sur un ensemble de dégivrage 13 apte à dégivrer et déglacer la lèvre d'entrée d'air 2. La peau interne 12 peut comporter dans certaines zones un panneau acoustique afin d'absorber les nuisances sonores dues au fonctionnement du turboréacteur 5. Le panneau acoustique comporte une structure en nid d'abeille 14 prise en sandwich entre une couche composite 15 percée de multiples trous acoustiques et une couche externe 16 pleine, c'est-à-dire ne présentant pas une multitude de trous acoustiques. La couche composite 15 surmonte l'ensemble de dégivrage 13.

L'ensemble de dégivrage 13 peut également être revêtu sur l'autre face d'un revêtement de surface 17 permettant de protéger ce dernier de l'érosion et d'éventuels impacts. L'ensemble de dégivrage 13, le cas échéant le revêtement de surface 17, est en contact avec le flux d'air froid 18 ce qui n'est pas le cas de la peau interne 12.

Dans d'autres zones de la lèvre d'entrée d'air 2 de l'invention, la peau interne 12 est une peau structurante non acoustique, à savoir comportant une structure en nid d'abeille sans trous acoustiques. Il est également possible que la peau interne 12 ne soit pas structurante mais uniquement une couche composite non acoustique.

La lèvre d'entrée d'air 2 est obtenue selon le procédé de l'invention.

Le procédé de l'invention fournit de manière simple un ensemble de dégivrage efficace. L'ensemble de dégivrage peut être avantageusement fabriqué antérieurement ou simultanément à la mise en oeuvre de la lèvre d'entrée d'air 2.

Le procédé de l'invention offre une possibilité de géométrie de réseau assez varié. De ce fait, il est possible de choisir de manière précise la forme du motif du réseau de sorte à avoir un dégivrage optimal en fonction du besoin.

Par ailleurs, le procédé de l'invention assure un positionnement précis du réseau de résistances chauffantes. Une telle précision de la position du réseau s'avère avantageuse lorsque l'ensemble de dégivrage est destiné à être fixé sur une structure acoustique.

Comme représenté sur les figures 3 à 7, dans l'étape A, on fabrique un réseau de résistances chauffantes 20 sur un support 24 par un procédé de photolithographie. Selon un mode de réalisation préférentiel, le support 24 est sensiblement plan ce qui permet de simplifier encore davantage la mise en oeuvre du procédé de l'invention. Selon une autre variante, il est également possible d'appliquer le procédé de photolithographie sur un support présentant la forme de la lèvre d'entrée d'air 2.

Pour fabriquer le réseau de résistances chauffantes, on fixe une couche conductrice 22 sur le support 24 par tout moyen connu de l'homme du métier. A titre d'exemple, la fixation est effectuée par une colle.

Les résistances chauffantes 20 comprennent un métal ou un alliage de résistivité comprise entre 0,0002 Ω.mm et 0,002 Ω.mm, de préférence entre 0,00024 Ω.mm et 0,002 Ω.mm, voire entre 0,0004 Ω.mm et 0,001 Ω.mm. De ce fait, les résistances chauffantes 20 génèrent une puisance de chauffage comprise entre 1 kW.m⁻² et 50 kW.m⁻², notamment entre 4 kW.m⁻² et 20 kW.m⁻². Une telle puissance de chauffage permet avantageusement de décoller tout givre ou glace formé sur la surface d'entrée d'air 2 en employant le minimum d'énergie électrique ou d'empêcher la formation d'un tel givre ou d'une telle glace.

En particulier, l'alliage des résistances chauffantes 20 est choisi parmi des alliages de cuivre et de nickel, par exemple le constantan (CuNi44).

Le support 24 est fabriqué préférentiellement à partir de fibres de verre, de résine epoxy ou de tout film isolant électriquement tel qu'un film thermoplastique. A titre d'exemple, on peut citer comme résine epoxy la résine epoxy 914®.

Sur la couche comportant les résistances chauffantes, une couche photosensible 26 comprenant au moins un élément photosensible est monté sur la couche conductrice 22. A tire d'exemple d'élément photosensible, on peut citer les résines négatives telle que la résine SU-8®, pour lesquelles le rayonnement ultraviolet entraîne une polymérisation des zones exposées, conférant à ces zones une tenue particulière au solvant de révélation alors que les parties non insolées disparaissent sélectivement dans le solvant de révélation. On peut également citer les résines positives de type résines AZ 9260®, S1818® et SJR 5740®, pour lesquelles le rayonnement ultraviolet produit une transformation chimique des macromolécules ce qui entraîne une solubilité accrue des zones exposées dans le révélateur, ou encore les résines inversibles de type AZ 5214® et T109XR® qui présentent la propriété de changer de polarité suite à une étape de recuit, dite d'inversion.

Comme représenté sur la figure 4, on applique un masque 30 au-dessus de l'ensemble constitué par le support 24, la couche conductrice 22 et la couche photosensible 26. Le masque comporte le motif 33 du réseau de résistance.

Afin d'obtenir le réseau de résistances chauffantes désiré, on insole tout d'abord l'ensemble par tout moyen 32 adapté et connu par l'homme du métier. A titre d'exemple, on peut citer une lampe UV.

La couche photosensible 26 protégée par le motif 33 dessiné sur le masque 30 n'est pas obscurcie par le rayonnement UV ce qui permet d'imprimer le motif sur ladite couche 26. La couche photosensible 26 non protégée est, quant à elle, obscurcie.

La durée de l'insolation est variable et dépend du motif que l'on veut graver. Typiquement, la durée d'insolation est d'environ 2 min 30s. En effet, la durée de l'exposition de la couche photosensible 26 doit être suffisamment longue pour que le motif 33 soit imprimé sur ladite couche photosensible 26 mais suffisamment courte pour éviter que les rayons UV ne traversent toute la superficie du masque 30, effaçant alors tout motif.

La couche photosensible 26 non protégée est ensuite éliminée par tout produit révélateur adapté et connu de l'homme du métier.

De ce fait, comme représenté à la figure 5, la couche photosensible restante 26 reproduit le motif du réseau désiré.

On applique ensuite tout produit chimique adapté et connu de l'homme du métier afin d'éliminer la partie 34 de la couche conductrice non située en-dessous de la couche photosensible 26 restante. Ainsi, comme représenté à la figure 6, il ne reste que la partie de la couche conductrice 22 située en-dessous du motif formé par la couche photosensible 26.

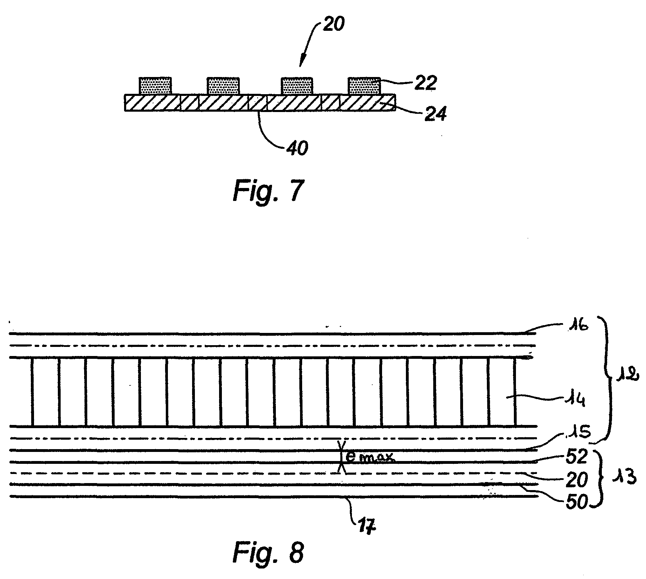

La couche photosensible 26 restante est alors éliminée par tout produit chimique adapté et connu de l'homme du métier de sorte que la couche conductrice 22 révèle le motif du réseau 20 de résistances chauffantes (voir figure 7).

Les résistances chauffantes de la couche conductrice 22 sont généralement sensibles à l'oxydation. De ce fait, elles peuvent nécessiterr d'être protégées. Ainsi, dans une variante de réalisation du procédé,, il est possible de prévoir une étape dans laquelle on oxyde le réseau 20 par dépôt d'une couche d'oxyde, par exemple par électrolyse.

Selon un mode de réalisation préféré non représenté, préalablement à l'étape B, on fabrique un réseau d'alimentation électrique (non représenté) sur la face opposée 40 du réseau de résistances chauffantes.

Le réseau d'alimentation peut être réalisé par tout moyen approprié connu de l'homme du métier, en particulier par un procédé de photolithographie, comme présenté ci-dessus.

Le réseau d'alimentation est de préférence relié au réseau de résistances chauffantes 20 par l'intermédiaire de moyens de connexion (non représentés) passant au travers du support 24.

Le réseau d'alimentation comprend typiquement un métal ou un alliage dont la résistivité est la plus faible possible afin de minimiser les pertes en ligne. De manière préférentielle, la résistivité du métal ou de l'alliage est égale à environ 1,7 µΩ.cm. Le réseau d'alimentation n'est pas destiné à dégager de la chaleur mais à conduire le courant jusqu'au réseau 20 de résistances chauffantes. Comme exemple de métal, on peut citer le cuivre.

Dans l'étape B du procédé de l'invention, on insère voire on encapsule ledit réseau 20 obtenu à l'issue de l'étape A dans des plis de matériaux composites 52 et 50 (voir figure 8).

Dans une variante de réalisation de l'étape B, le support 24 peut se substituer à l'un des plis de matériaux composites 52 ou 50. Dans ce cas, dans l'étape B, on applique un pli de matériau composite 50 ou 52 sur le réseau 20 obtenu à l'issue de l'étape A.

Le réseau 20 sera ainsi inséré entre le support 24 d'un côté et un pli de matériau composite 50 ou 52 du côté opposé.

Préférentiellement, chaque pli 50 et 52 comprend un matériau comme de la fibre de verre associée à une résine thermodure (Epoxy) ou thermoplastique (PEEK). Les plis au contact ou proches des réseaux éléctriques doivent les isoler électriquement d'autres composants ou de plis électriquement conducteurs comme le carbone epoxy couramment utilisé pour couches 15 transmettant des efforts.

La fixation du réseau 20 obtenu à l'issue de l'étape A sur le ou les plis de matériaux composites 50,52 peut être renforcée par tout moyen connu de l'homme du métier, notamment par collage.

Selon un mode de réalisation préféré, on applique à l'issue de l'étape B ou C un revêtement surface 17 ce qui permet de répondre aux chocs, aux contraintes aérodynamiques, d'érosion et de protection contre la foudre. Le revêtement de surface 17 est par exemple un treillis métallique ou encore une couche de fibre de carbone. La fixation du revêtement de surface 17 sur l'ensemble de dégivrage 13 se fait par tout moyen connu et adapté de l'homme du métier, notamment par collage.

Dans l'étape C du procédé de l'invention, on applique la peau interne 12 sur l'ensemble de dégivrage 13 ainsi obtenu. La fixation de la peau interne 12 sur l'ensemble de dégivrage 13 est réalisée par tout moyen connu de l'homme du métier, notamment par collage.

Le procédé de l'invention comporte une étape B1 entre l'étape B et C dans laquelle on perce l'ensemble de dégivrage obtenu à l'issue de l'étape B par des moyens de perçage de sorte à obtenir des trous acoustiques de diamètre préférentiellement compris entre 0,2 mm et 2,5 mm, voire entre 0,3 et 2 mm. Avantageusement, on utilise des moyens de perçage permettant d'avoir une précision des trous de l'ordre de 0,05 mm par rapport au réseau de résistances chauffantes 20. A titre d'exemple de moyens de perçage, on peut citer une perceuse, un laser et un jet d'eau.

Selon un mode de réalisation, il est intéressant que les moyens de perçage se recalent grâce à une caméra de type radio sur une mire de référence gravée lors de la formation du réseau de résistances chauffantes 20. Une distance comprise entre 0,2 mm et 10 mm, voire entre 0,5 mm et 1 mm, peut être prévue entre les trous acoustiques et les branches du réseau 20, de sorte de garantir une isolation électrique entre les résistances et l'extérieur.

Ainsi, il est possible d'obtenir à la fois un ensemble de dégivrage 13 efficace pour dégivrer la lèvre d'entée d'air 2 et également une meilleure performance acoustique.

Selon le procédé de l'invention, on perce l'ensemble de dégivrage 13 et la couche composite 15 de la peau interne 12 par les moyens de perçage.

La couche composite 15 de la peau interne 12 est réalisée et percée préalablement à l'étape C. Autrement dit, la peau externe 15 est percée préalablement à sa pose sur l'ensemble de dégivrage 13.

Selon un mode de réalisation préféré, dans le cas où le support 24 est sensiblement plan, préalablement à l'étape C, on découpe la surface de l'ensemble de dégivrage 13 de sorte que l'écart maximal emax entre l'ensemble de dégivrage 13 et la peau interne 12 , généralement de forme non développable, soit de l'ordre de 1,7 mm ce qui permet une bonne conformation de l'ensemble de dégivrage 13, notamment pendant la cuisson de ce dernier. De ce fait, l'ensemble de dégivrage 13 réalisé initialement sensiblement à plat épouse les courbures de la lèvre d'entrée d'air 2.

Lorsque la lèvre d'entrée d'air 2 est fabriquée selon le procédé de l'invention, ladite lèvre 2 est soumise à une cuisson dont les conditions sont connues de l'homme du métier afin de garantir une bonne cohésion de l'ensemble.

La lèvre d'entrée 2 obtenue par le procédé selon l'invention est intégrée à la nacelle 1 d'un aéronef.

## Revendications

1. Procédé de fabrication d'une lèvre d'entrée d'air (2) d'une nacelle (1) comprenant les étapes où :
A. on fabrique un réseau de résistances chauffantes (20) sur un support (24) par un procédé de photolithographie ;
B. on applique un pli de matériaux composites (50,52) sur le réseau (20) obtenu à l'issue de l'étape A pour obtenir un ensemble de dégivrage (13) ;
B1. on perce l'ensemble de dégivrage (13) obtenu à l'issue de l'étape B et une peau interne (12), comportant une peau composite sur laquelle est montée une structure en nid d'abeille, par des moyens de perçage de sorte à obtenir des trous acoustiques ;
C. on applique la peau interne (12), destinée à être placée à l'intérieur d'une lèvre d'entrée d'air (2) de la nacelle (1), sur l'ensemble de dégivrage (13) obtenu à l'issue de l'étape B1.

2. Procédé selon la revendication précédente **caractérisé en ce que** l'étape B est une étape dans laquelle on insère dans des plis (50,52) de matériaux composites ledit réseau (20) obtenu à l'étape A.

3. Procédé selon la revendication 1 **caractérisé en ce que** les trous acoustiques obtenus ont un diamètre compris entre 0,2 mm et 2,5 mm.

4. Procédé selon l'une quelconque des revendications précédentes, **caractérisé en ce que**, préalablement à l'étape B, on fabrique un réseau d'alimentation électrique sur la face opposée (40) de la face du support (24) comportant le réseau de résistances chauffantes (20).

5. Procédé selon la revendication précédente, **caractérisé en ce que** le réseau d'alimentation est relié au réseau de résistances chauffantes (20) par l'intermédiaire de moyens de connexion passant au travers du support (24).

6. Procédé selon la revendication 4 ou 5, **caractérisé en ce que** le réseau d'alimentation comprend un métal ou un alliage dont la résistivité à température ambiante est égale à environ 1,7 µΩ.cm.

7. Procédé selon l'une quelconque des revendications précédentes, **caractérisé en ce que** les résistances chauffantes comprennent un métal ou alliage de résistivité comprise entre 0,00024 Ω.mm et 0,002 Ω.mm.

8. Procédé selon la revendication précédente, **caractérisé en ce que** l'alliage des résistances chauffantes (20) est choisi parmi les alliages de cuivre et de nickel.

9. Procédé selon l'une quelconque des revendications précédentes, **caractérisé en ce que** le support (24) est fabriqué à partir de fibres de verre, de résine epoxy, ou de film isolant thermoplastique.

10. Procédé selon l'une quelconque des revendications précédentes, **caractérisé en ce que**, pendant l'étape A, le support (24) est sensiblement plat.

11. Procédé selon l'une quelconque des revendications précédentes, **caractérisé en ce que** chaque pli (50, 52) comprend un matériau type fibre de verre associée à une résine thermodure ou thermoplastique.

12. Procédé selon l'une quelconque des revendications précédentes, **caractérisé en ce que** préalablement à l'étape C, on découpe la surface de l'ensemble de dégivrage (13) de sorte que l'écart maximal (emax) entre l'ensemble de dégivrage (13) et la peau interne (12) soit de l'ordre de 1,7 mm.

13. Procédé selon l'une quelconque des revendications précédentes, **caractérisé en ce qu'**on applique à l'issue de l'étape B ou C un revêtement de surface (17) sur l'ensemble de dégivrage (13).

14. Nacelle (1) pour turboréacteur comportant un lèvre d'entrée d'air (2) obtenu selon le procédé de l'une quelconque des revendications précédentes.

## Patentansprüche

1. Verfahren zur Herstellung einer Lufteinlasslippe (2) einer Gondel (1), umfassend die Schritte, bei denen:
A. ein Netz von Heizwiderständen (20) auf einem Träger (24) durch ein Photolithographieverfahren hergestellt wird;
B. eine Schicht aus Verbundmaterialien (50, 52) auf dem Netz (20) aufgebracht wird, erhalten am Ende des Schritts A, um eine Enteisungseinheit (13) zu erhalten;
B1. die Enteisungseinheit (13), erhalten am Ende von Schritt B, und die innere Haut (12), umfassend eine Verbundhaut, auf der eine Wabenstruktur montiert ist, durch Bohrmittel durchbohrt werden, um akustische Löcher zu erhalten;
C. die innere Haut (12), die ausgelegt ist, um im Inneren einer Lufteinlasslippe (2) der Gondel (1) angeordnet zu sein, auf der Enteisungseinheit (13), die am Ende von Schritt B1 erhalten wird, aufgebracht wird.

2. Verfahren nach dem vorhergehenden Anspruch, **dadurch gekennzeichnet, dass** der Schritt B ein Schritt ist, in dem in Schichten (50, 52) von Verbundmaterialien das Netz (20) eingeführt wird, das in Schritt A erhalten wurde.

3. Verfahren nach Anspruch 1, **dadurch gekennzeichnet, dass** die erhaltenen akustischen Löcher einen Durchmesser aufweisen, der zwischen 0,2 mm und 2,5 mm liegt.

4. Verfahren nach einem der vorhergehenden Ansprüche, **dadurch gekennzeichnet, dass** vor dem Schritt B ein elektrisches Versorgungsnetz auf der gegenüberliegenden Fläche (40) der Fläche des Trägers (24) hergestellt wird, die das Netz von Heizwiderständen (20) umfasst.

5. Verfahren nach dem vorhergehenden Anspruch, **dadurch gekennzeichnet, dass** das Versorgungsnetz mit dem Netz von Heizwiderständen (20) mit Hilfe von Verbindungsmitteln verbunden ist, die durch den Träger (24) verlaufen.

6. Verfahren nach Anspruch 4 oder 5, **dadurch gekennzeichnet, dass** das Versorgungsnetz ein Metall oder eine Legierung umfasst, deren spezifischer Widerstand gegen die Umgebungstemperatur gleich ungefähr 1,7 pΩ.cm ist

7. Verfahren nach einem der vorhergehenden Ansprüche, **dadurch gekennzeichnet, dass** die Heizwiderstände ein Metall oder eine Legierung mit einem spezifischen Widerstand umfassen, der zwischen 0,00024 Ω.mm und 0,002 Ω.mm liegt.

8. Verfahren nach dem vorhergehenden Anspruch, **dadurch gekennzeichnet, dass** die Legierung der Heizwiderstände (20) ausgewählt ist aus den Legierungen aus Kupfer und Nickel.

9. Verfahren nach einem der vorhergehenden Ansprüche, **dadurch gekennzeichnet, dass** der Träger (24) auf der Grundlage von Glasfasern, Epoxyharz oder thermoplastischem Isolierfilm hergestellt ist.

10. Verfahren nach einem der vorhergehenden Ansprüche, **dadurch gekennzeichnet, dass** während Schritt A der Träger (24) im Wesentlichen flach ist.

11. Verfahren nach einem der vorhergehenden Ansprüche, **dadurch gekennzeichnet, dass** jede Schicht (50, 52) ein Material vom Typ Glasfaser, assoziiert mit einem duroplastischen oder thermoplastischen Harz, umfasst.

12. Verfahren nach einem der vorhergehenden Ansprüche, **dadurch gekennzeichnet, dass** vor Schritt C die Oberfläche der Enteisungseinheit (13) geschnitten wird, so dass der maximale Abstand (emax) zwischen der Enteisungseinheit (13) und der inneren Haut (12) im Bereich von 1,7 mm liegt.

13. Verfahren nach einem der vorhergehenden Ansprüche, **dadurch gekennzeichnet, dass** am Ende von Schritt B oder C eine Oberflächenbeschichtung (17) auf die Enteisungseinheit (13) aufgebracht wird.

14. Gondel (1) für ein Turbostrahltriebwerk, umfassend eine Lufteingangslippe (2), die gemäß dem Verfahren nach einem der vorhergehenden Ansprüche erhalten wird.

## Claims

1. A method for manufacturing an air inlet lip (2) of a nacelle (1) comprising the steps of :
A. manufacturing a heating resistor network (20) on a support (24) by means of a photolithography method ;
B. applying a fold (50, 52) of composite materials on the network (20), obtained on completion of step A, in order to obtain a de-icing set (13) ;
B1. piercing the de-icing set (13), obtained on completion of step B and an inner skin (12), including a composite skin on which a honeycomb structure is mounted, by piercing means so as to obtain acoustic holes ;
C. applying the inner skin (12), intended to be placed inside an air inlet lip (2) of the nacelle (1), on the de-icing set (13) obtained on completion of step B1.

2. The method according to the preceding claim, **characterized in that** step B is a step during which said network (20), obtained in step A, is inserted within folds (50, 52) of composite materials.

3. The method according to claim 1, **characterized in that** the obtained acoustic holes have a diameter comprised between 0.2 mm and 2.5 mm.

4. The method according to any one of the preceding claims, **characterized in that**, prior to step B, an electric power supply network is manufactured on the face (40) opposite to the face of the support (24) including the heating resistor network (20).

5. The method according to the preceding claim, **characterized in that** the power supply network is connected to the heating resistor network (20) via connecting means passing through the support (24).

6. The method according to claim 4 or 5, **characterized in that** the power supply network comprises a metal or an alloy the resistivity of which at ambient temperature is equal to about 1.7 µΩ.cm.

7. The method according to any one of the preceding claims, **characterized in that** the heating resistors comprise a metal or an alloy the resistivity of which is comprised between 0.00024 Ω.mm and 0.002 Ω.mm.

8. The method according to the preceding claim, **characterized in that** the alloy of the heating resistors (20) is selected among the alloys of copper and nickel.

9. The method according to any one of the preceding claims, **characterized in that** the support (24) is manufactured from fiberglass, an epoxy resin, or a thermoplastic insulating film.

10. The method according to any one of the preceding claims, **characterized in that**, during step A, the support (24) is substantially flat.

11. The method according to any one of the preceding claims, **characterized in that** each fold (50, 52) comprises a fiberglass-type material associated to a thermosetting or thermoplastic resin.

12. The method according to any one of the preceding claims, **characterized in that**, prior to step C, the surface of the de-icing set (13) is sliced so that the maximum gap (emax) between the de-icing set (13) and the inner skin (12) is in the range of 1.7 mm.

13. The method according to any one of the preceding claims, **characterized in that**, on completion of step B or C, a surface coating (17) is applied over the de-icing set (13).

14. A nacelle (1) for a turbojet engine including an air inlet lip (2) obtained according to the method of any one of the preceding claims.
